# EUROPEAN PATENT SPECIFICATION

(11) **EP 1 657 143 B1**
(45) Date of publication and mention of the grant of the patent: **30.12.2009**
(21) Application number: 04771803.6
(22) Date of filing: 18.08.2004
(51) Int. Cl.: B62D 55/14

(54) **RUBBER CRAWLER TRAVELING DEVICE**
FAHRVORRICHTUNG FÜR GUMMIRAUPENKETTE
DISPOSITIF ROULANT A CHENILLES EN CAOUTCHOUC

(30) Priority: 19.08.2003 JP 2003294866
(43) Date of publication of application: 17.05.2006
(73) Proprietor: Bridgestone Corporation, Tokyo 104-8340 (JP)
(72) Inventor: SUGIHARA, Shingo, c/o Bridgestone Corporation, Tokyo 1048340 (JP)
(74) Representative: Whalley, Kevin
(86) International application number: PCT/JP2004/011842
(87) International publication number: WO 2005/016727

(56) References cited:
- EP-A2- 0 585 721
- JP-A- 3 279 088
- JP-A- 3 279 088
- JP-U- 56 095 983
- US-A- 5 127 714

## Description

### TECHNICAL FIELD

The present invention relates to a rubber track traveling device, and more particularly to a rubber track traveling device which ensures straight traveling.

### BACKGROUND ART

A rubber track traveling device of the present invention will be described below in connection with a friction-drive type rubber track. Steel cords serving as tension reinforcing materials are embedded in a rubber elastic body, which has ends, in a longitudinal direction thereof. An endless rubber track is formed by overlapping the steel cords at the ends of the rubber elastic body. Guides are formed at predetermined intervals at a center of the rubber elastic body on an inner side thereof, while lugs are formed on an outer side of the rubber elastic body.

Even when rubber tracks look the same at the first glance, slight difference in the length in a transverse direction, presence of twists, or difference in the tension of the steel cords is inevitable.

For this reason, it has been suggested that, when each of the rubber tracks is mounted to a vehicle, the properties (characteristics) of the rubber track be understood first, and then the orientation of an idler wheel of the vehicle be adjusted in accordance with the properties of the rubber track.

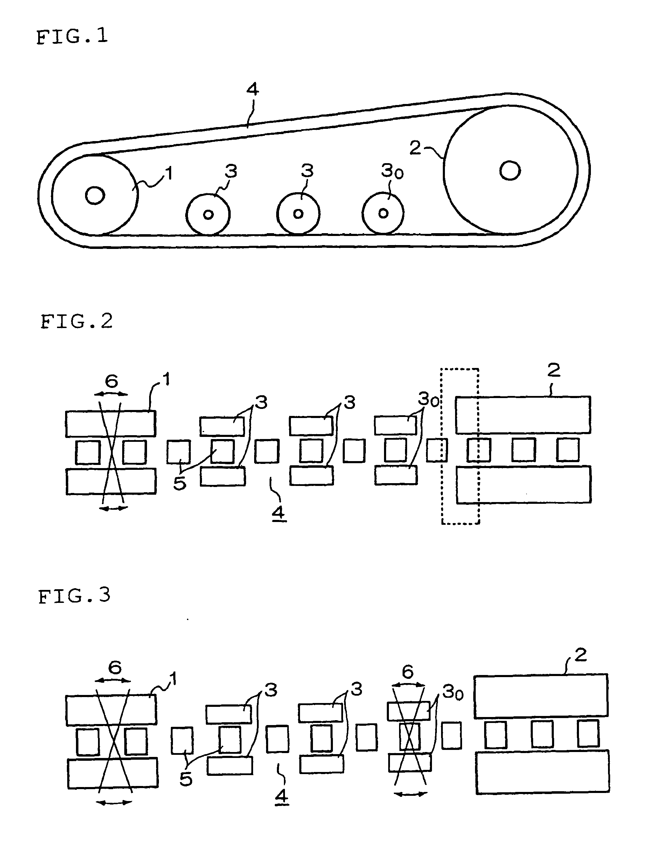

Fig. 1 is a conceptual view of a rubber track traveling device. A rubber track 4 is entrained around an idler wheel 1, a drive wheel 2 and wheels 3. Fig. 2 is a view showing the state of the rubber track traveling device on a ground-contact surface. In Fig. 2, reference numeral 5 indicates guides formed at predetermined intervals on an inner peripheral surface of the rubber track 4 at a center thereof. Namely, the idler wheel 1, the drive wheel 2 and the wheels 3 travel at both sides of the guides 5. When the vehicle and the rubber track 4 do not travel in identical directions, the guides 5 collide with the respective wheels (1, 2 and 3). As a result, wear of the guides 5 increases, thereby decreasing the life of the rubber track 4.

Normally, an adjustment mechanism 6 may be provided at the idler wheels 1 in order to orient the direction of the rubber track 4 to the direction of the vehicle. Specifically, a mechanism which can adjust the orientation of the idler wheels 1 (in directions indicated by arrows) is provided in order to compensate for the characteristics of each rubber track.

However, in examining the causes of uneven wear of the guides 5 of the rubber track 4, it is found that the greatest effects occur when the guides 5 enter under the drive wheels 2, which are heavy and have a large diameter (i.e., the portion surrounded by a dotted line). Namely, even if the orientation of the rubber track 4 is adjusted at the idler wheels 1 as in the conventional art, this adjustment force does not last until it reaches the drive wheels 2 since the distance from the idler wheels 1 to the drive wheels 2 is long. As a result, the rubber track 4 proceeds in a different direction or meanders. Thus, uneven contact of the guides 5 with the drive wheels 2 at the portion surrounded by the dotted line is inevitable, and uneven wear of the guides 5 increases.
US 5 127 714 discloses a rubber track traveling device according to the preamble of claim 1.

### DISCLOSURE OF THE INVENTION

### PROBLEMS TO BE SOLVED BY THE INVENTION

In light of the above-described conventional technology, an object of the present invention is to adjust the direction, meandering and the like of the rubber track, particularly in relation to the drive wheels so that the contact between the guides and the drive wheels becomes normal.

### MEANS FOR SOLVING THE PROBLEMS

The above problems are solved by the special features of claim 1.

### EFFECTS OF THE INVENTION

The rubber track traveling device of the present invention has the above-described structure and preferably includes a plurality of adjustment mechanisms in order to orient the direction of the rubber track to the direction of the vehicle. With this structure, uneven wear of the guides is significantly reduced and, consequently, the life of the rubber track is greatly improved.

### BRIEF DESCRIPTION OF THE DRAWINGS

Fig. 1 is a conceptual view of a conventional rubber track traveling device.
Fig. 2 is a view showing the state of the rubber track traveling device of Fig. 1 on a ground-contact surface.
Fig. 3 is a view showing the state of a rubber track traveling device of the present invention on a ground-contact surface.
Fig. 4 is a view showing a first embodiment of an adjustment mechanism.
Fig. 5 is a view showing a second embodiment of the adjustment mechanism.
Fig. 6 is a side view showing a third embodiment of the adjustment mechanism.
Fig. 7 is a plan view of Fig. 6.
Fig. 8 is a plan view showing a fourth embodiment of the adjustment mechanism.

### BEST MODE FOR CARRYING OUT THE INVENTION

In the present invention, as described above, adjustment is preferably carried out at two portions. Particularly, when an adjustment function is provided at the wheel closest to the drive wheel, influence of the drive wheel on the guides can be minimized, and thus uneven wear of the guides can be prevented. Namely, even if adjustment is performed at the idler wheel, it is inevitable that the rubber track, which has passed the plurality of wheels, is slightly displaced from the original adjustment. Thus, the adjustment mechanism is normally provided at the wheels as well to correct the orientation of the rubber track, such that the rubber track is moved to the drive wheel with the best orientation possible. In this way, uneven wear of the guides can be significantly reduced.

Adjustment of the idler wheel and the wheel can be carried out in no other way than by trial and error because the adjustment varies according to the properties of the rubber track. Thus, the easiest process for adjustment is as follows. First, the rubber track is entrained around the respective wheels. Thereafter, the rubber track is made to travel straight several hundred meters. Then, the temperature of side surfaces of the guides of the rubber track is used to determine the friction thereof. Finally, based on the results, adjustment is sequentially carried out until an optimum value is obtained.

A specific embodiment of the adjustment mechanism is an adjustment mechanism including: a shaft supporting a pair of idler wheels or wheels; a connecting member connected to the shaft at a proximal end thereof; a shaft supporting the connecting member at a central portion thereof so that the connecting member is rotatable in a horizontal direction relative to the vehicle; a frame fixed to the vehicle and accommodating a distal end of the connecting member; and adjusting screws disposed at sides of the frame and being movable in the horizontal direction so as to be able to change the orientation of the distal end of the connecting member.

A second embodiment is an adjustment mechanism including: a shaft supporting a pair of idler wheels or wheels; a horizontal rod extending the shaft; a frame fixed to the vehicle and accommodating the horizontal rod; and adjusting screws disposed at sides of the frame and being movable in a horizontal direction so as to be able to change the orientation of the horizontal rod.

A third embodiment is an adjustment mechanism including: a shaft supporting a pair of idler wheels or wheels; a vertical rod connected to the shaft; a connecting member connected to the vertical rod; a frame fixed to the vehicle and accommodating the connecting member; and adjusting screws disposed at sides of the frame and being movable in a horizontal direction so as to be able to change the orientation of a distal end of the connecting member.

### First Embodiment

The present invention will be described below in more detail with reference to the drawings. A conceptual view of the rubber track traveling device of the present invention is the same as Fig. 1. Fig. 3 is a view showing the state of the rubber track traveling device on a ground-contact surface. Reference numerals 1, 2, 3, 4, 5 and 6 in the drawings are defined as described above, and description thereof will be omitted.

An embodiment of the present invention is a structure in which the adjustment mechanism 6 (for adjustment in directions indicated by the arrows) is provided at the idler wheels 1 and at least wheels 30 closest to the drive wheels 2. Because of this structure, straight traveling and the like of the rubber track are adjusted twice, i.e., at the idler wheels 1 and the wheels 30. As a result, the rubber track contacts the drive wheels 2 with a desirable orientation, thereby significantly reducing (uneven) wear of the rubber track.

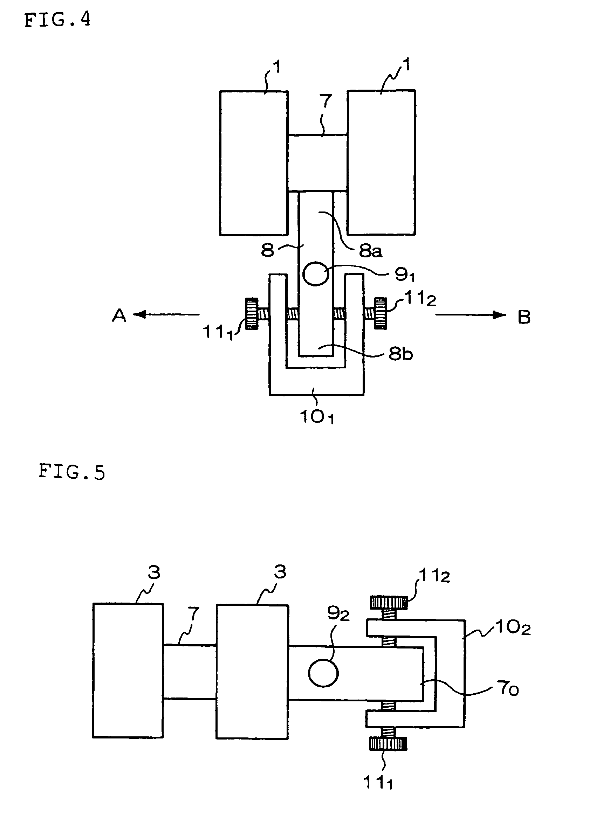

Fig. 4 is a view showing a first specific embodiment of the adjustment mechanism 6. The adjustment mechanism 6 which is provided at the idler wheels 1 will now be described. A connecting member 8 is provided at a shaft 7 supporting the idler wheels 1, and a proximal end 8a of the connecting member 8 is connected to the shaft 7. Further, the connecting member 8 is supported by a shaft 91 at a central portion of the connecting member 8 so as to be rotatable in a horizontal direction. A distal end 8b of the connecting member 8 is accommodated in a frame 101 fixed to a vehicle. Adjusting screws 111, 112 are provided at sides of the frame 101. The adjusting screws 111, 112 are adjusted so as to move and position the connecting member 8, whereby the orientation of the idler wheels 1 is adjusted.

More specifically, by adjusting the adjusting screws 111, 112 in direction A, the distal end 8b of the connecting member 8 is oriented in the direction A and the proximal end 8a is oriented in direction B. Thus, the shaft 7 connected to the proximal end 8a is oriented in the direction B, and the idler wheels 1, 1 are also oriented in the direction B. This adjustment is repeated to achieve a desired orientation.

### Second Embodiment

Fig. 5 is a view showing a second embodiment of the adjustment mechanism 6. In the second embodiment, the shaft 7 supporting the wheels 3 (30) is extended, and a horizontal portion (extended portion) 70 thereof is supported by a shaft 92 so as to be rotatable relative to a vehicle. The horizontal portion 70 is accommodated in a frame 102 as in the first embodiment. The adjusting screws 111, 112 are adjusted so as to change the orientation of the horizontal portion 70, whereby the orientation of the wheels 3 is adjusted. A specific process for adjustment is carried out as described in the previous paragraph. In this case, two pairs of the adjusting screws, i.e., the adjusting screws 111, 112 and adjusting screws 113, 114, are provided to enable fine adjustment of the orientation of a frame 12, which also enables fine adjustment of the orientation of the wheels 3, 3.

### Third Embodiment

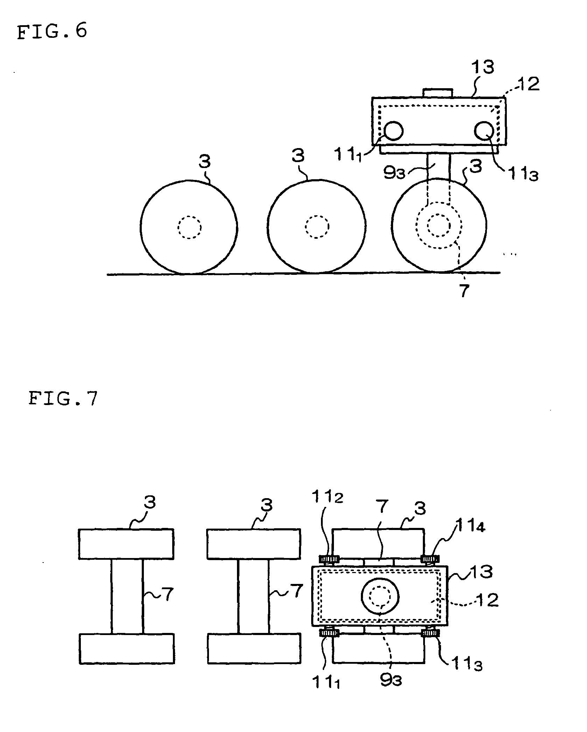

Figs. 6 and 7 are views showing a third specific embodiment of the adjustment mechanism 6. In the third embodiment, a vertical shaft 93 is provided at the shaft 7 which supports the wheels 30 closest to the drive wheels 2. A connecting member (the frame 12 in this embodiment) is connected to the vertical shaft 93 and supported by a frame 13, which accommodates the frame 12 and is fixed to a vehicle, so as to be rotatable relative to the vehicle. The adjusting screws 111, 112, 113 and 114 are provided at sides of the frame 13 and adjusted so as to position the frame 12, whereby the orientation of the wheels 3 is adjusted. A specific process for adjustment is carried out as described in the previous paragraph. In this case, two pairs of the adjusting screws, i.e., the adjusting screws 111, 112 and the adjusting screws 113, 114, are provided to enable fine adjustment of the orientation of the frame 12, which also enables fine adjustment of the orientation of the wheels 3, 3.

### Fourth Embodiment

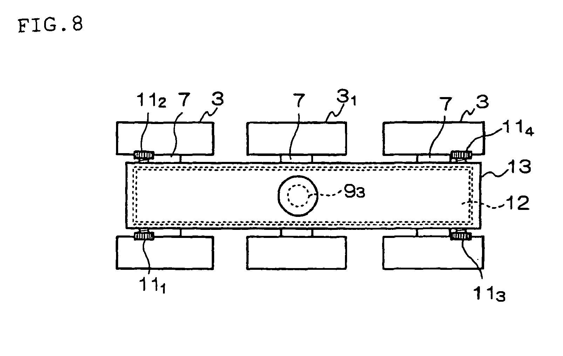

Fig. 8 is a view showing another configuration of the third specific embodiment of the adjustment mechanism 6. The vertical shaft 93 is provided at the shaft 7 supporting, for example, wheels 31 which are the center pair of three pairs of wheels 3. The vertical shaft 93 is supported so as to be rotatable relative to a vehicle. Further, the frame 12 which is significantly long in the horizontal direction is fixed to the vertical shaft 93. The frame 13 fixed to the vehicle covers the frame 12. The adjusting screws 111, 112, 113 and 114 are provided at sides of the frame 13 in a transverse direction thereof. The adjusting screws 111, 112, 113 and 114 are adjusted so as to position the frame 12, whereby the orientation of the wheels 3 is adjusted. In this case, the elongated shape of the frame 13 in the transverse direction enables extremely fine adjustment with the adjusting screws. A specific process for adjustment is carried out as described in the previous paragraph. In this case, two pairs of the adjusting screws, i.e., the adjusting screws 111, 112 and the adjusting screws 113, 114, are provided to enable finer adjustment of the orientation of the frame 12, which also enables finer adjustment of the orientation of the wheels 3, 3.

### INDUSTRIAL APPLICABILITY

The rubber track traveling device of the present invention preferably includes a plurality of adjustment mechanisms in order to orient the direction of the rubber track to the direction of the vehicle. With this structure, uneven wear of the guides is significantly reduced. Thus, the adjustment mechanism can be applied not only to low-speed rubber track traveling devices but also to rubber tracks for relatively high-speed vehicles such as off-road vehicles.

### DESCRIPTION OF THE REFERENCE NUMERALS

1: idler wheel
2: drive wheel
3, 30, 31: wheels
4: rubber track
5: guides
6: adjustment mechanism
7, 70: shafts supporting the idler wheel
8: connecting member
8a: proximal end of the connecting member
8b: distal end of the connecting member
91, 92, 93: shafts
101, 102, 12: frames
111, 112, 113, 114: adjusting screws
12: frame fixed to a vertical rod
13: frame fixed to a vehicle

## Claims

1. A rubber track traveling device comprising:
a pair of idler wheels (1, 1) provided at a vehicle;
a drive wheel (2);
pairs of wheels (3, 3) provided between the pair of idler wheels (1,1) and the drive wheel (2) on a ground-contact surface side; and
a rubber track (4) entrained around the pair of idler wheels (1, 1), the drive wheel (2) and the pairs of wheels (3, 3), wherein the rubber track (4) has plural guides (5) on an inner peripheral surface at a center thereof, **characterized by**
an adjustment mechanism (6) for orienting the direction of the rubber track (4) to the direction of the vehicle is provided at the pair of idler wheels (1, 1) and at a pair of wheels (3, 3) closest to the drive wheel (2), and wherein the adjustment mechanism (6) adjusts the orientations of shafts (7) supporting the pair of idler wheels (1, 1) and the pair of wheels (3, 3), respectively.

2. A rubber track traveling device as claimed in claim 1,
wherein the adjustment mechanism (6) includes: a shaft (7) supporting a pair of idler wheels (1, 1) and/or wheels (3, 3); a connecting member (8) connected to the shaft (7) at a proximal end (8a) thereof; a shaft (91) supporting the connecting member (8) at a central portion thereof so that the connecting member is rotatable in a horizontal direction relative to the vehicle; a frame (101) fixed to the vehicle and accommodating a distal end of the connecting member (8); and adjusting screws (111, 112) disposed at sides of the frame (101) and being movable in the horizontal direction so as to be able to change the orientation of the distal end of the connecting member (8).

3. A rubber track traveling device as claimed in claim 1,
wherein the adjustment mechanism (6) includes: a shaft (7) supporting a pair of idler wheels (1, 1) and/or wheels (3, 3); a horizontal rod (70)
extending the shaft (7); a frame (102) fixed to the vehicle and accommodating the horizontal rod (70); and adjusting screws (111, 112) disposed at sides of the frame (102) and being movable in a horizontal direction so as to be able to change the orientation of the distal end of the horizontal rod (70).

4. A rubber track traveling device as claimed in claim 1,
wherein the adjustment mechanism (6) includes: a shaft (7) supporting a pair of idler wheels (1, 1) and/or wheels (3, 3); a vertical rod (93) connected to the shaft (7); a connecting member (12) connected to the vertical rod (93); a frame (13) fixed to the vehicle and accommodating the connecting member (12); and adjusting screws (111, 112, 113, 114) disposed at sides of the frame (13) and being movable in a horizontal direction so as to be able to change the orientation of the distal end of the connecting member (12).

## Patentansprüche

1. Fahrvorrichtung für Gummiraupenkette, die aufweist:
ein Paar Laufräder (1, 1), das an einem Fahrzeug bereitgestellt wird;
ein Antriebsrad (2);
Paare von Rädern (3, 3), die zwischen dem Paar der Laufräder (1, 1) und dem Antriebsrad (2) auf einer Reifenaufstandsflächenseite bereitgestellt werden; und
eine Gummiraupenkette (4), die um das Paar der Laufräder (1, 1), das Antriebsrad (2) und die Paare der Räder (3, 3) mitgeführt wird, wobei die Gummiraupenkette (4) mehrere Führungen (5) auf einer inneren Umfangsfläche in einer Mitte davon aufweist, **dadurch gekennzeichnet, dass**
ein Einstellmechanismus (6) für das Ausrichten der Richtung der Gummiraupenkette (4) zur Richtung des Fahrzeuges an dem Paar der Laufräder (1, 1) und an einem Paar der Räder (3, 3), das dem Antriebsrad (2) am nächsten ist, bereitgestellt wird, und wobei der Einstellmechanismus (6) die Ausrichtungen der Wellen (7) einstellt, die jeweils das Paar der Laufräder (1, 1) und das Paar der Räder (3, 3) tragen.

2. Fahrvorrichtung für Gummiraupenkette nach Anspruch 1,
bei der der Einstellmechanismus (6) umfasst: eine Welle (7), die ein Paar der Laufräder (1, 1) und/oder der Räder (3, 3) trägt; ein Verbindungselement (8), das mit der Welle (7) an einem proximalen Ende (8a) davon verbunden ist; eine Welle (91), die das Verbindungselement (8) in einem mittleren Abschnitt davon trägt, so dass das Verbindungselement in einer horizontalen Richtung relativ zum Fahrzeug drehbar ist; einen Rahmen (101), der am Fahrzeug befestigt ist und ein distales Ende des Verbindungselementes (8) aufnimmt; und Stellschrauben (111, 112), die an den Seiten des Rahmens (101) angeordnet und in der horizontalen Richtung beweglich sind, um so die Ausrichtung des distalen Endes des Verbindungselementes (8) verändern zu können.

3. Fahrvorrichtung für Gummiraupenkette nach Anspruch 1,
bei der der Einstellmechanismus (6) umfasst: eine Welle (7), die ein Paar der Laufräder (1, 1) und/oder der Räder (3, 3) trägt; einen horizontalen Stab (70), der die Welle (7) verlängert; einen Rahmen (102), der am Fahrzeug befestigt ist und den horizontalen Stab (70) aufnimmt; und Stellschrauben (111, 112), die an den Seiten des Rahmens (102) angeordnet und in einer horizontalen Richtung beweglich sind, um so die Ausrichtung des distalen Endes des horizontalen Stabes (70) verändern zu können.

4. Fahrvorrichtung für Gummiraupenkette nach Anspruch 1,
bei der der Einstellmechanismus (6) umfasst: eine Welle (7), die ein Paar der Laufräder (1, 1) und/oder der Räder (3, 3) trägt; einen vertikalen Stab (93), der mit der Welle (7) verbunden ist; ein Verbindungselement (12), das mit dem vertikalen Stab (93) verbunden ist; einen Rahmen (13), der am Fahrzeug befestigt ist und das Verbindungselement (12) aufnimmt; und Stellschrauben (111, 112, 113, 114), die an den Seiten des Rahmens (13) angeordnet und in einer horizontalen Richtung beweglich sind, um so die Ausrichtung des Verbindungselementes (12) verändern zu können.

## Revendications

1. Dispositif de déplacement à chenille en caoutchouc comprenant :
une paire de roues de renvoi (1, 1) situées au niveau d'un véhicule ;
une roue d'entraînement (2) ;
des paires de roues (3, 3) situées entre les deux roues de renvoi (1, 1) formant paire et la roue d'entraînement (2) sur un côté de surface en contact avec le sol ; et
une chenille en caoutchouc (4) entraînée autour de la paire de roues de renvoi (1, 1), la roue d'entraînement (2) et les paires de roues (3, 3), où la chenille en caoutchouc (4) comporte une pluralité de guides (5) sur une surface périphérique interne en son centre, **caractérisé par**
un mécanisme de réglage (6) pour orienter la direction de la chenille en caoutchouc (4) relativement à la direction du véhicule étant situé au niveau de la paire de roues de renvoi (1, 1) et au niveau d'une paire de roues (3, 3) la plus proche de la roue d'entraînement (2), et où le mécanisme de réglage (6) règle les orientations d'arbres (7) supportant la paire de roues de renvoi (1, 1) et la paire de roues (3, 3), respectivement.

2. Dispositif de déplacement à chenille en caoutchouc selon la revendication 1, dans lequel le mécanisme de réglage (6) comprend : un arbre (7) supportant une paire de roues de renvoi (1, 1) et/ou de roues (3, 3) ; un élément de connexion (8) relié à l'arbre (7) à une extrémité proximale (8a) de celui-ci ; un arbre (91) supportant l'élément de connexion (8) en une partie centrale de manière que l'élément de connexion puisse tourner dans une direction horizontale par rapport au véhicule ; un châssis (101) fixé au véhicule et logeant une extrémité distale de l'élément de connexion (8) ; et des vis de réglage (111, 112) disposées sur les côtés du châssis (101) et étant mobiles dans la direction horizontale afin de pouvoir changer l'orientation de l'extrémité distale de l'élément de connexion (8).

3. Dispositif de déplacement à chenille en caoutchouc selon la revendication 1, dans lequel le mécanisme de réglage (6) comprend : un arbre (7) supportant une paire de roues de renvoi (1, 1) et/ou de roues (3, 3) ; une tige horizontale (70) prolongeant l'arbre (7) ; un châssis (102) fixé au véhicule et logeant la tige horizontale (70) ; et des vis de réglage (111, 112) disposées sur les côtés du châssis (102) et étant mobiles dans une direction horizontale afin de pouvoir changer l'orientation de l'extrémité distale de la tige horizontale (70).

4. Dispositif de déplacement à chenille en caoutchouc selon la revendication 1, dans lequel le mécanisme de réglage (6) comprend : un arbre (7) supportant une paire de roues de renvoi (1, 1) et/ou de roues (3, 3) ; une tige verticale (93) reliée à l'arbre (7) ; un élément de connexion (12) relié à la tige verticale (93) ; un châssis (13) fixé au véhicule et logeant l'élément de connexion (12) ; et des vis de réglage (111, 112, 113, 114) disposées sur les côtés du châssis (13) et étant mobiles dans une direction horizontale afin de pouvoir changer l'orientation de l'extrémité distale de l'élément de connexion (12).
